# EUROPÄISCHE PATENTSCHRIFT

(11) **EP 0 859 704 B1**
(45) Veröffentlichungstag und Bekanntmachung des Hinweises auf die Patenterteilung: **06.12.2000**
(21) Anmeldenummer: 97941991.8
(22) Anmeldetag: 08.09.1997
(51) Int. Cl.: B60C 27/10

(54) **SPANNSCHLOSS FÜR GLEITSCHUTZKETTEN**
TURNBUCKLE FOR NON-SKID CHAINS
TENDEUR POUR CHAINES ANTIDERAPANTES

(30) Priorität: 09.09.1996 DE 19636544
(43) Veröffentlichungstag der Anmeldung: 26.08.1998
(73) Patentinhaber: CONTIWEISS WEISSENFELS GMBH & CO. KG, 59423 Unna (DE)
(72) Erfinder: FRANKLIN, Charles, R., I-33010 Fusine in Valromana (IT)
(74) Vertreter: Geyer, Werner, Dr.-Ing.
(86) Internationale Anmeldenummer: EP9704874
(87) Internationale Veröffentlichungsnummer: WO9809831

(56) Entgegenhaltungen:
- DE-A- 3 930 613
- DE-U- 8 402 467
- DE-U- 8 902 454
- DE-U- 29 615 694

## Beschreibung

Die Erfindung bezieht sich auf ein Spannschloß für Gleitschutzketten mit einem Gehäuse, das ein Umlenkelement für eine darüberlaufende Spannkette aufweist, mit einer zwischen einer Öffnungsstellung und einer Sperrstellung verschwenkbaren Sperrklinke, die federnd in ihre Sperrstellung gegen das Umlenkelement hin vorgespannt ist und die eine vorstehende Nase aufweist, mit der sie die Spannkette entgegen einem Durchlauf in Spannrichtung blockiert, und mit einem am Gehäuse seitlich angebrachten, über die ganze Höhe des Gehäuses verlaufenden Schlitz, durch den hindurch die Spannkette seitlich von außen in das Gehäuse eingeführt und auf das Umlenkelement aufgelegt werden kann.

Bei einem bekannten Spannschloß dieser Art (DE 39 30 613 C2) ist die Sperrklinke in Form eines einarmigen Hebels ausgebildet, der oben aus dem Gehäuse hervorsteht und im Bereich seines freien Endes T-förmig mit einem Quersteg versehen ist, dessen auf eine Seite des Hebels vorstehender Teil als Nase der Sperrklinke und dessen auf die andere Seite überstehender Abschnitt zur Betätigung durch den Benutzer dient. Dabei drückt die Sperrklinke mit ihrer Nase von der Außenseite des Gehäuses her und außerhalb desselben gegen die Spannkette und preßt diese gegen die Außenfläche des Umlenkelementes. Wenn die Nase in Form eines breiten, von der Sperrklinke etwa senkrecht vorragenden Schenkels von oben her auf ein flach liegendes Kettenglied der Spannkette anliegt und die Spannkette entgegen der Spannrichtung gezogen wird, kommt es zu einer Arretierung, weil das Kettenglied, das dem unter der Nase liegenden Kettenglied folgt, mit seinem Bugsteg gegen die Vorderkante des Sperrschenkels anläuft und nicht weiterlaufen kann. Wegen der sehr kleinen Kontaktflächen kommt es dabei zum Auftreten sehr großer Flächenpressungen, wobei bei schlagartiger Zugbeanspruchung der Spannkette die Gefahr einer Beschädigung der für die Arretierwirkung verantwortlichen Vorderkante des Sperrschenkels besteht, was dann zu einer Beeinträchtigung der Gesamtfunktion führen kann. Das bekannte Spannschloß kann nach einem Blockiervorgang manuell auch nur geöffnet werden, wenn zuvor die Spannkette etwas in Spannrichtung gezogen wurde, weil der Sperrschenkel (Nase) der Sperrklinke beim Öffnen anfänglich noch gegen den Bug des vordem arretierten Kettengliedes anläuft, was einen erhöhten Kraftaufwand erfordert. Bei einem Zug der Spannkette in Spannrichtung löst sich durch die eingesetzte Geometrie zwar die Blockierung durch die Nase der Sperrklinke, aber auch hierfür ist ein relativ großer Zug erforderlich, da der Anlaufwinkel der aus dem Gehäuse des Spannschlosses herauslaufenden Spannkette zur Unterseite des Sperrschenkels relativ groß ist und damit die Öffnungskraft groß wird. Insgesamt ist dieses bekannte Spannschloß infolge seiner Konstruktion etwas schwergängig, was auch dessen Funktionsfähigkeit beeinträchtigt.

Hier soll nun die Erfindung Abhilfe schaffen und ein Spannschloß vorschlagen, das eine insgesamt besonders leichtgängige Handhabung bei verbesserter Funktionsfähigkeit bietet.

Erfindungsgemäß wird dies bei einem Spannschloß der eingangs genannten Art dadurch erreicht, daß die Nase der Sperrklinke als eine in den Zwischenraum zwischen zwei Längsschenkeln eines Kettengliedes der Spannkette einführbare Formnase ausgebildet ist, die mit ihrer in Richtung zur Sperrstellung hin vorne liegenden Nasenfläche eine im wesentlichen geradlinige Verlängerung der Außenfläche eines zur Verschwenkachse der Sperrklinke führenden Klinkenschenkels darstellt und mit einer mittig liegenden, bis in diese Außenfläche des Klinkenschenkels verlaufenden Führungsnut versehen ist, deren Nutform der Außenkontur der Kettenglieder der Spannkette angepaßt ist.

Bei dem erfindungsgemäßen Spannschloß wird zunächst dadurch, daß eine Formnase vorgesehen ist, die in den Zwischenraum zwischen die Seitenschenkel eines einzelnen Kettengliedes der Spannkette einführbar ist, die Möglichkeit geschaffen, daß die Formnase zwischen die Seitenschenkel eines quer zu ihr liegenden Kettengliedes der Spannkette eingreifen kann, wobei durch den dadurch erreichten Formschluß die Lage des Kettengliedes sowohl zur Nase, wie auch zum Umlenkelement festgelegt werden kann. Gleichzeitig wird durch das Vorhandensein der Führungsnut auf der der Spannkette zugewandten Seite der Formnase und der in ihrer Verlängerung vorliegenden Außenfläche des Klinkenschenkels und der Anpassung dieser Nutfläche an die Außenkontur der Kettenglieder der Spannkette erreicht, daß das in Spannrichtung der Spannkette auf das von der Formnase gehaltene Kettenglied folgende Kettenglied durch diese Führungnut in der gewünschten Ausrichtung und Lage zu dem anderen Kettenglied gehalten und damit auch bei einem Zug in Spannrichtung in vorbestimmter Ausrichtung auf der Unterseite der dann automatisch hochklappenden Sperrklinke solange geführt wird, bis diese wieder unter der Wirkung der Vorspannung nach Durchlauf dieses Kettengliedes in ihre Sperrstellung zurückfedert und dabei gleichzeitig in das dann wiederum folgende Kettenglied, nämlich in den Zwischenraum zwischen dessen Seitenschenkel, mit ihrer Formnase eingreift. So wird also bei einem Durchlauf der Spannkette in Spannrichtung eine selbsttätige Ausrichtung und Führung der einzelnen Kettenglieder während des Überlaufens des Umlenkelementes und beim Vorbeilaufen an der Sperrklinke erreicht, was ein Verkanten der Spannkette in diesem Bereich verhindert, eine besonders gute Ausrichtung und Führung der einzelnen Kettenglieder gewährleistet und damit insgesamt zu einer erhöhten Funktionsfähigkeit beiträgt. Auch das automatische Aufheben der Blockierung bei einem Zug in Spannrichtung wird durch die genauere Führung und Lage der Kettenglieder erleichtert und damit gleichzeitig die Handhabung verbessert. Das erfindungsgemäße Spannschloß arbeitet bei einem Zug in Schließrichtung sehr leichtgängig bei der automatischen Aufhebung der Blockierung und beim Durchlauf der Spannkette, wobei bei einer Zugumkehr, also einem Zug in Richtung eines Öffnens der Kette, funktionssicher die gewünschte Blockierung sogleich eintritt, ohne daß es dabei zu unerwünschten Verformungen im Bereich des Einwirkens der Sperrklinke bzw. deren Formnase auf die Kette kommt. Die Handhabung des Spannschlosses wird aber auch noch dadurch erleichtert, daß die Unterseite der Formnase in geradliniger Verlängerung des zur Verschwenkachse des Klinkenhebels verlaufenden Klinkenschenkels ausgebildet ist: dadurch verläuft auf dieser Seite die Außenfläche des Klinkenhebels geradlinig, d.h. sie liegt in einer äußeren Abschlußebene. Hierdurch kann die Erfassung der Kettenglieder der Spannkette in der Führungsnut auf der Unterseite der Sperrklinke bzw. deren Formnase über eine besonders große Länge hinweg erfolgen, d.h. die Führungswirkung auf das erfaßte Glied geht über einen relativ langen Abschnitt desselben und ist damit besonders gut wirksam.

Das erfindungsgemäße Spannschloß weist insgesamt einen unkomplizierten und einfachen Aufbau auf und kann auch preisgünstig hergestellt werden, da alle erforderlichen Formgebungen bereits bei der Herstellung der Sperrklinke mit einem Werkzeug erfolgen können.

Besonders bevorzugt wird die Sperrklinke so im Gehäuse angeordnet, daß sie in ihrer vollen offenen Stellung nicht mehr in den Bereich des seitlichen Schlitzes im Gehäuse hineinragt, so daß sie seitlich besonders einfach und völlig ungestört in das Innere des Gehäuses ein- bzw. aus diesem herausgeführt werden kann.

Die Formnase kann in jeder für den eingesetzten Zweck geeigneten Weise ausgebildet werden. Ganz besonders bevorzugt wird die Formnase jedoch auf ihrer dem Umlenkelement abgewandten (also ihrer "oberen") Außenfläche mit einer konvex nach außen gewölbten Form versehen, die besonders bevorzugt auch noch in eine Krümmung im Bereich des vorstehenden Nasenendes übergeht. Diese Abrundungen der Form an den angegebenen Stellen führen dazu, daß die Klinke aus der Sperrstellung bzw. die Formnase aus dem zugeordneten Kettenglied der Spannkette besonders leicht heraus- bzw. in dieses hineingeklappt werden kann, was die Betätigung der Sperrklinke bzw. deren automatisches Ein- und Ausrücken in die bzw. aus der Blockierposition begünstigt und erleichtert.

Eine ganz besonders bevorzugte Ausgestaltung des erfindungsgemäßen Spannschlosses besteht auch darin, daß die Sperrklinke so im Gehäuse angeordnet ist, daß sie nur mit ihrem für die manuelle Betätigung durch den Benutzer bestimmten Betätigungsschenkel aus dem Gehäuse hervorragt, während ihr Rest, insbesondere auch die Formnase, innerhalb des Gehäuses liegt, und zwar über deren gesamten Verschwenkbereich hinweg. Dadurch wird der Vorteil erreicht, daß gerade dieser für die Blockierwirkung wichtige Bereich des Klinkenhebels einschließlich dessen Eingriffstelle mit der Spannkette innerhalb des Gehäuses des Spannschlosses liegt und damit äußere Einflüssen weitestgehend entzogen ist, was die Lebensdauer und die langfristige Funktionsfähigkeit des erfindungsgemäßen Spannschlosses deutlich begünstigt.

Zur weiteren Verbesserung der Handhabung ist es vorteilhaft, wenn auf der Außenfläche des Betätigungsschenkels der Sperrklinke dort, wo der Kraftangriff durch den Benutzer erfolgt, eine geeignete Griffmulde ausgebildet ist, die vorteilhafterweise auch noch mit kleinen Riffen, Noppen oder sonst einer geeigneten Oberflächenstrukturierung versehen sein kann, um ein Abrutschen des Fingers bei der Betätigung des Klinkenhebels zu vermeiden.

Vorteilhafterweise besteht das Gehäuse und/oder das Umlenkelement aus Blech, wobei besonders bevorzugt das Umlenkelement einstückig mit den Seitenwänden des Gehäuses ausgebildet ist. Die Sperrklinke besteht bevorzugt aus Kunststoff, insbesondere aus Polycarbonat, weil sich hierdurch nicht nur eine einfache und preisgünstige Herstellbarkeit ergibt, sondern auch günstige Reibeigenschaften an den Konstaktstellen mit den aus Metall bestehenden Gliedern der Spannkette vorliegen.

Die Formgebung der Führungsnut wird so gewählt, daß sie der Außenformgebung der Kettenglieder der Spannkette entspricht, damit eine besonders gute Führung vorliegt, wenn ein solches Kettenglied mit einem Teil seiner Außenfläche in diese Nut teilweise einläuft und dort geführt werden soll. Da die Glieder vieler Spannketten aus einem im Querschnitt kreisförmigen Draht bestehen, wird besonders bevorzugt für solche Fälle die Führungsnut mit einem kreisabschnittförmigen Querschnitt versehen.

Es ist weiter besonders vorteilhaft, wenn die Tiefe der Führungsnut mit wachsender Entfernung vom Ende der Formnase größer wird, wobei der in der Führungsnut geführte Seitenschenkel bzw. Bugschenkel eines Kettengliedes in der Nut nach "hinten" (d.h. mit wachsendem Abstand vom freien Nasenende weg) hin seitlich immer mehr gehaltert wird. Dies begünstigt auch den Einlauf in die Führungsnut, in die die Spannkette in einer gekrümmten Führungsbahn einläuft. Besonders bevorzugt wird die Führungsnut so ausgeführt, daß sie an ihrem von der Formnase abgewandten Ende offen ist, indem sie z.B. dort in einen gegabelten Endbereich ausläuft, durch dessen Gabelzinken die Verschwenkachse läuft. Damit besteht die Möglichkeit, daß der Einlauf in die Führungsnut gegebenenfalls auch durch dieses offene Ende erfolgen bzw. ein aufzunehmendes Kettenglied dort so einschwenken kann, daß für den Einschwenkvorgang dieser offene Endquerschnitt ebenfalls zur Verfügung steht.

Die Erfindung wird nachfolgend anhand der Zeichnung im Prinzip beispielshalber noch näher erläutert. Es zeigen:
Fig. 1 eine Seitenansicht eines erfindungsgemäßen Spannschlosses, wobei die Sperrklinke in ihre volle Öffnungsstellung gebracht ist und eine Spannkette durch den seitlichen Gehäuseschlitz eingeführt wird;
Fig. 2 eine Ansicht gemäß II-II aus Fig. 1;
Fig. 3 eine vergrößerte Perspektivdarstellung einer Sperrklinke zum Einsatz bei einem erfindungsgemäßen Spannschloß;
Fig. 4 eine Schnittdarstellung gemäß Schnittlage IV-IV aus Fig. 2, jedoch bei bereits eingeführter Spannkette, in der Blockierstellung der Sperrklinke;
Fig. 5 die Schnittdarstellung aus Fig. 4, jedoch bei einem Zug der Spannkette in Spannrichtung, zum Zeitpunkt des Einlaufs des folgenden Gliedes der Spannkette in die Führungsnut;
Fig. 6 die Darstellung aus Fig. 5, jedoch in einer Lage, in der das in die Führungsnut eingelaufene Kettenglied der Spannkette die Sperrklinke bereits etwas in Richtung ihrer Öffnungsstellung verklappt hat;
Fig. 7 die Darstellung aus Fig. 6, bei der jedoch das in die Führungsnut eingelaufene Kettenglied der Spannkette bereits an seinem in Zugrichtung vorderen Ende unter der Formnase hervorläuft und die Sperrklinke nahezu in ihre volle Öffnungsstellung verklappt ist, und
Fig. 8 eine Ansicht gemäß Pfeil A in Fig. 7.

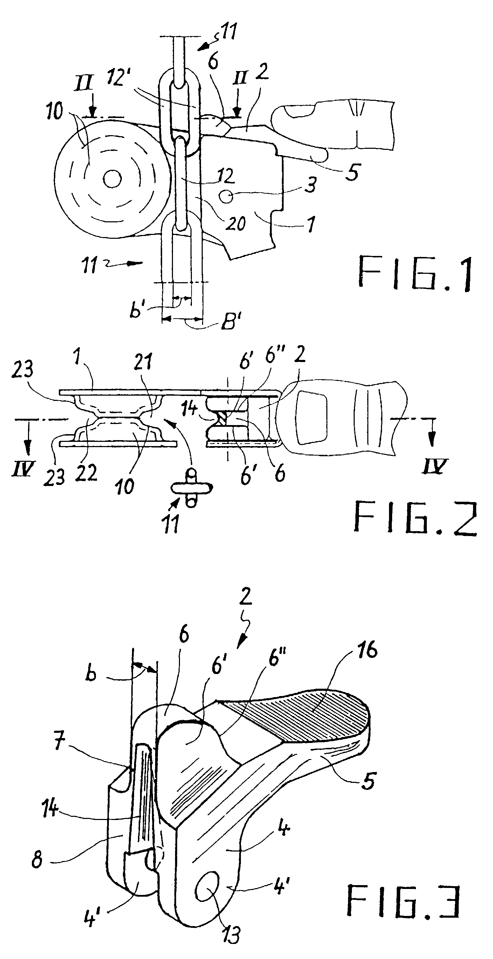

Zunächst wird auf die Darstellungen der Fig. 1, 2 und 4 Bezug genommen:

Fig. 1 zeigt eine Seitenansicht eines Spannschlosses mit einem Gehäuse 1, das auf seiner dem Betrachter zugewandten Seite mit einem sich über die gesamte Gehäusehöhe erstreckenden Einführungsschlitz 20 versehen ist, durch den eine Spannkette 11 von der Seite her in das Innere des Gehäuses 1 eingeführt werden kann, wie dies durch die Pfeildarstellung an der Spannkette 11 in Fig. 2 angedeutet ist, wobei Fig. 2 eine teilweise geschnittene Draufsicht gemäß Schnittlage II-II aus Fig. 1 zeigt.

Die Einführung der Spannkette 11 erfolgt, wie in Fig. 1 gezeigt, seitlich derart, daß an der engsten Stelle des Schlitzes ein Kettenglied 12 der Spannkette 11, dessen Gliedebene in Einführrichtung des Schlitzes ausgerichtet ist, durch diesen hindurchgeführt wird. Dabei ist der Einführungsschlitz 20 an seiner engsten Stelle kleiner als die Breite B' der Kettenglieder 12 der Spannkette 11, wie dies auch aus Fig. 2 gut entnommen werden kann, so daß die Spannkette 11 im eingelegten Zustand beim Durchlaufen des Gehäuses 1 nicht aus dem Schlitz 20 wieder herauslaufen kann.

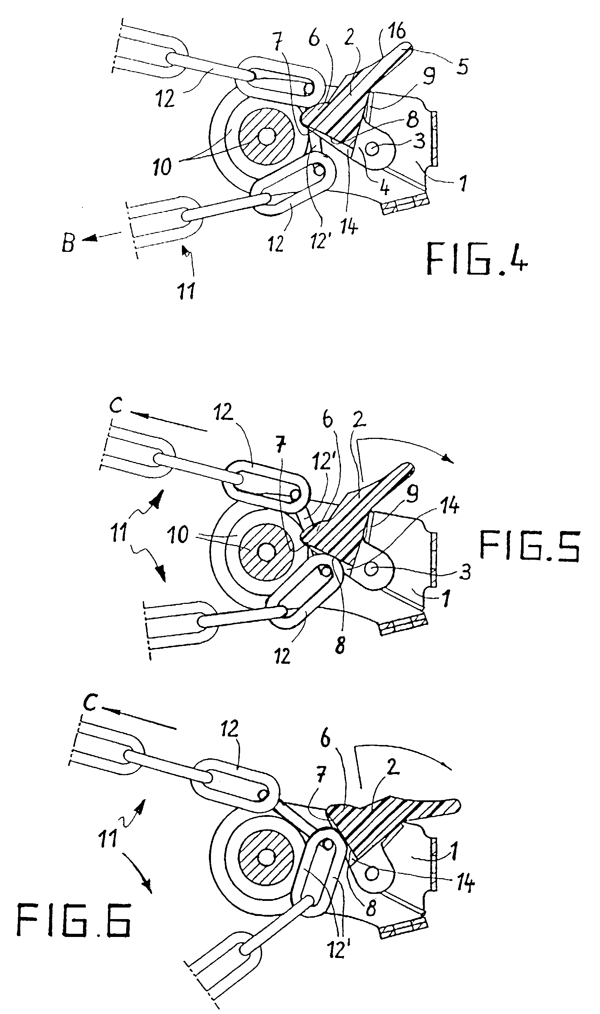

Innerhalb des Gehäuses 1 ist eine Sperrklinke 2 um eine Schwenkachse 3 verschwenkbar angebracht. Wie die Darstellung der Fig. 4 zeigt, in der ein Schnitt durch das Spannschloß gemäß Fig. 2 entsprechend der Schnittlage IV-IV gezeigt ist, jedoch in einem Zustand mit bereits eingeführter Spannkette 11 und mit der Sperrklinke 12 in deren Schließstellung, besteht die Sperrklinke 2 aus einem allgemein U- bzw. V-förmigen Teil, das einen Schenkel 4 aufweist, der im Bereich seines einen Endes um die Schwenkachse 3 verschwenkbar gelagert ist, und einen weiteren, von dem Schenkel 4 nach oben (gemäß der zeichnerischen Darstellung in Fig. 4) ragenden und aus dem Gehäuse 1 vorstehenden Betätigungsschenkel 5, über den ein Benutzer, wie in Fig. 1 gezeigt, mit einem Finger die Sperrklinke 2 aus ihrer Schließstellung in eine Öffnungsstellung verschwenken kann.

Innerhalb des Gehäuses 1 ist ferner, wie insbesondere die Fig. 2 und 4 zeigen, ein Umlenkelement 10 angebracht, das zur Umlenkung der in das Gehäuse 1 eingelegten Zugkette 11 dient, wie dies in Fig. 4 dargestellt ist. Das Umlenkelement 10 weist im Inneren des Gehäuses eine umlaufende Formfläche 21 auf (vgl. Fig. 2), deren Formgebung so ist, daß sie in ihrem mittleren Bereich eine Vertiefung 22 ausbildet, deren Seitenflanken an ihrem radialen Ende in axial nach außen weisende Schultern 23 übergehen. Die Form der umlaufenden Vertiefung 22 ist dabei so gewählt, daß ein Kettenglied 12 der Spannkette 11 mit seinen Seitenschenkeln 12' in diese Vertiefung 22 hineingleiten kann, wobei die Bodenkrümmung der Vertiefung 22 dem Krümmungsradius R der Seitenschenkel 12' der Kettenglieder der Spannkette 11 entspricht. Die axial nach außen laufenden Schultern 23 sind in einem solchen Abstand vom Boden der Vertiefung 22 angebracht, daß die Kettenglieder 12 der Spannkette 11, die beim Umlauf um das Umlenkelement 10 auf die in die Vertiefung 22 hineinragenden Kettenglieder 12 folgen und zu diesen angenähert rechtwinklig ausgerichtet sind, mit ihren beiden Seitenschenkeln 12' jeweils sich auf diesen Schultern 23 abstützen können.

Das Umlenkelement 10 besteht ebenso wie das Gehäuse 1 aus einer Blechkonstruktion und ist in geeigneter Weise einstückig mit der bzw. den Seitenwänden des Gehäuses 1 verbunden (die Herstellung erfolgt z.B. durch eine entsprechende Tiefpreß-Technik von der jeweiligen Gehäuseseite her).

Die im Gehäuse 1 um die Schwenkachse 3 verschwenkbare Sperrklinke 2 ist in Fig. 3 in einer perspektivischen Darstellung vergrößert gezeigt:

Sie besteht aus einem einstückigen Kunststoffteil, bevorzugt aus Polycarbonat, und weist zwei Schenkel 4 und 5 auf, die zwischen sich einen spitzen Winkel ausbilden. Dabei läuft der Schenkel 4 an seinem freien Ende in zwei Gabelzinken 4' aus, die jeweils mit einer Durchgangsbohrung 13 versehen sind, durch die der Schwenkzapfen 3 hindurchragt, mit dem sie am Gehäuse 1 angelenkt sind. Der Schenkel 4 weist an seiner vom Schenkel 5 abgewandten Seite eine äußere Begrenzungsfläche 8 auf, die (abgesehen von den Abrundungen am freien Ende beider Gabelzinken 4') in einer Ebene liegt und in Verlängerung dieser Ebene in die auf derselben Seite liegende Außenfläche 7 der Formnase 6 geradlinig übergeht.

Wie die Formdarstellung der Figur 3 zeigt (auf die zeichnerische Darstellung der Fig. 3 sei als erfindungswesentlich ausdrücklich hingewiesen), geht die Außenfläche 7 der Formnase 6 in eine Abrundung über, die das freie Ende der Formnase 6 ausbildet bzw. umläuft, wobei letztere auf der der Außenfläche 7 gegenüberliegenden Seitenfläche 6" eine nach außen gewölbte konvexe Oberfläche aufweist.

Im Endbereich der in Fig. 3 oben dargestellten Seite des Betätigungsschenkels 5 ist eine Griffmulde 16 mit quer verlaufenden Rippen ausgebildet, die dazu dient, daß der Finger eines Benutzers (Fig. 1) bequem zu ihrer Betätigung angreifen kann.

Auf der in Verlängerung der Außenfläche 8 des Schenkels 4 der Sperrklinke 2 liegenden Außenfläche 7 der Formnase 6 ist eine in Längsrichtung des Schenkels 4 verlaufende, zentral angeordnete Nut 14 ausgebildet, die, wie aus Fig. 3 ersichtlich, mit wachsender Entfernung vom freien Ende der Formnase 6 zunehmend tiefer wird. Diese Nut 14 verläuft von vorne in der Formnase 6 bis in den Schenkel 4 hinein und mündet frei an einer Stelle, an der sich der Schenkel 4 in seine zwei Gabelzinken 4' aufteilt.

Wie aus Fig. 3 ferner entnommen werden kann, verlaufen die beiden seitlichen Begrenzungsflächen 6' der Formnase 5 in ihrem von der Spitze der Formnase 6 ausgehenden Bereich zunächst parallel zueinander, wonach sie in ihrem anschließenden Endbereich unter Ausbildung einer Wölbung in die Oberfläche des Betätigungsschenkels 5 einmünden. Dabei ist die Breite b der Formnase 6 (vgl. Fig. 3) so gewählt, daß sie geringfügig kleiner als die Innenbreite b' der Kettenglieder 12 der Spannkette 11 ist, so daß eine Einführung der Formnase 6 zwischen die Seitenschenkel 12' der Kettenglieder 12 der Spannkette 11 leicht möglich ist.

Wie die Darstellung der Fig. 4 zeigt, ist die Sperrklinke 2 mittels einer Blattfeder 9 in ihre Schließstellung (die in Fig. 4 dargestellt ist) hin vorgespannt, in der sie gegen das Umlenkelement 10 gedrückt wird und bevorzugt dort mit ihren seitlichen Bereichen an den Seitenbereichen des Umlenkelementes 10, z.B. im Bereich der seitlichen Schulter 23, anliegt. In ihrer Blockierstellung ragt die Formnase 6 zwischen die Seitenschenkel 12' eines Kettengliedes 12 der Spannkette 11 hinein, wobei die beiden Seitenschenkel 12' dieses Kettengliedes 12 jeweils neben einer der beiden Seitenflanken 6' der Formnase 6 liegen. Gleichzeitig liegen diese Seitenschenkel 12' aber auch auf den seitlichen Schultern 23 des Umlenkelementes 10 (in ihrem mittleren Erstreckungsbereich) auf, so daß insgesamt dieses Kettenglied 12 von der Formnase 6 und den seitlichen Schultern 23 des Umlenkelementes 10 in einer genau vorgegebenen Ausrichtung gehalten wird, nämlich parallel zur Mittenachse des ringförmig umlaufenden Umlenkelementes 10.

Wenn nun auf die Spannkette 11 ein Zug in Richtung des Pfeiles B in Fig. 4 wirkt, d.h. in einer Richtung entgegen der Spannrichtung, wird der Spannstrang 11 blockiert. Wie aus Fig. 4 entnehmbar ist, erfolgt die Blockierung dadurch, daß ein Kettenglied 12 der Spannkette 11 gegen die (bei der Darstellung in Fig. 4: obere) gekrümmte Außenfläche der Formnase 6 anliegt und letztere in ihre Schließstellung drückt, so daß eine Bewegung der Spannkette 11 formschlüssig blockiert wird, wobei wegen der gegeneinander anlaufenden gerundeten Flächen von Kettenglied 12 und Formnase 6 eine vergleichsweise große Anlagefläche entsteht.

Wird hingegen die Spannkette 11 in Spannrichtung, also in entgegengesetzter Richtung unter Zug gesetzt, wie dies den Darstellungen der Fig. 5 bis 7 zugrundeliegt (vgl. dort: Pfeil C), wird die Blockierung durch die Sperrklinke 2 kraft- und formschlüssig sogleich aufgehoben und in dieser Richtung kann nun ein Durchlaufen der Spannkette 11 durch das Gehäuse 1 ohne weiteres stattfinden.

Die Fig. 5 bis 7 geben einen solchen Durchlauf wieder, aus dem auch die Kinematik der Aufhebung der Blockierung durch die Sperrklinke 2 erkennbar ist:

Fig. 5 zeigt in einer im Prinzip der Darstellung der Fig. 4 gleichartigen Darstellung den Fall, daß die Spannkette 11, die in Spannrichtung (Pfeil C) gezogen wird, gegenüber der Darstellung der Fig. 4 schon um einen kleinen Weg in Pfeilrichtung C verschoben ist, wobei hier auf der (in den Fig. 5 bis 7; unteren) Seite der Sperrklinke 2, auf der die Führungsnut 14 ausgebildet ist, das nächste Kettenglied 12 der Spannkette 11 mit seinem in Bewegungsrichtung vorderen Bug gerade in die Führungsnut 14 bis zur Anlage gegen den Boden derselben einläuft.

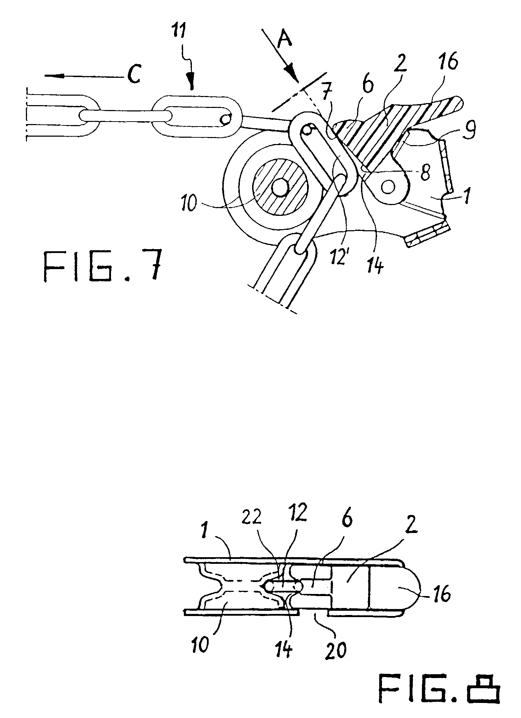

Fig. 6 zeigt die Anordnung, nachdem die Spannkette 11 um ein weiteres Stück in Spannrichtung C weiterbewegt wurde: Der in Zugrichtung vorne liegende Abschnitt des in der Führungsnut 14 der Sperrklinke 2 aufgenommenen Kettengliedes 12 hat sich unter der Wirkung der Zugkraft um ein Stück nach oben um das Umlenkelement 10 herumbewegt, wodurch die Sperrklinke 2 entgegen der Wirkung einer Vorspann-Druckfeder 9 etwas in ihre Öffnungsrichtung verklappt wird. Bei weiter wirkendem Zug in Spannrichtung C wandert dieses in der Führungsnut 14 teilweise aufgenommene Kettenglied 12 der Spannkette 11 noch weiter in Spannrichtung (also bei den Figurendarstellungen: nach oben) und öffnet dabei die Sperrklinke 2 entgegen deren Vorspannung immer weiter in Öffnungsrichtung, wobei gleichzeitig der auf der Unterseite der Sperrklinke 2 liegende Schenkel 12' des betreffenden Kettengliedes 12 auf seiner diesem zugewandten Außenseite mit zunehmender Länge in die Führungsnut 14 hineinragt. Den Zustand, bei dem der in Zugrichtung vorne liegende Bereich dieses Kettengliedes 12 bereits unter der Formnase 6 hindurchgetreten ist, zeigt Fig. 7. Gleichzeitig liegt das folgende Kettenglied 12 der Spannkette 11, das um 90° gedreht zu dem in die Führungsnut 14 ragenden Kettenglied ist, mit seinen beiden Seitenschenkeln bereits wieder auf den seitlichen Schultern 23 des Umlenkelementes 10 auf, wodurch es in richtiger Lage so unter die Sperrklinke 12 einläuft, daß, nachdem das in der Führungsnut 14 aufgenommene Kettenglied 12 der Spannkette 11 aus der Führungsnut 14 herausgelaufen ist, sich die Sperrklinke 2 unter Einwirkung der Vorspannfeder 9 wieder in ihre Schließstellung selbsttätig zurückstellt und dabei in das bereits entsprechend ausgerichtete, folgende Kettenglied 12 mit ihrer Formnase 6 eingreifen kann.

In Fig. 8 ist schließlich die Draufsicht gemäß Pfeil A aus Fig. 8 gezeigt, wobei jedoch nur das in die Führungsnut 14 hineinragende Kettenglied 12 der Spannkette 11 dargestellt ist, die in Zugrichtung vorausgehenden Kettenglieder jedoch der besseren Darstellung halber weggelassen sind.

Fig. 8 zeigt deutlich, wie das gerade zwischen der Sperrklinke 2 und dem Umlenkelement 10 befindliche Kettenglied 12 der Spannkette 11 mit seinem einen Seitenschenkel in der Führungsnut 14 der Formnase 6 und mit seinem anderen Seitenschenkel in der Vertiefung 22 des Umlenkelementes 10 geführt wird. Durch die Vorspannung der Sperrklinke 2 wird stets ein Anlagekontakt dieses Kettengliedes 12 sowohl mit dem Boden der Führungsnut 14, wie auch mit dem Boden der Vertiefung 22 sichergestellt und damit eine präzise Ausrichtung und Führung des Kettengliedes beim Durchlauf durch das Gehäuse 1 gewährleistet, was sich in einem besonders leichtgängigen Lauf, geringen Reibkräften und in einer vorzüglichen Funktionsfähigkeit äußert.

## Patentansprüche

1. Spannschloß mit einem Gehäuse, das ein Umlenkelement (10) für eine darüberlaufende Spannkette (11) aufweist, mit einer zwischen einer Öffnungsstellung und einer Sperrstellung verschwenkbaren Sperrklinke (2), die federnd in ihre Sperrstellung gegen das Umlenkelement (10) hin vorgespannt ist und eine vorstehende Nase (6) aufweist, mit der die Spannkette (11) entgegen einem Durchlauf in Spannrichtung blockierbar ist, und mit einem am Gehäuse (1) seitlich angebrachten, über die ganze Höhe des Gehäuse (1) verlaufenden Schlitz, durch den hindurch die Spannkette (11) seitlich von außen in das Gehäuse eingeführt und auf das Umlenkelement (10) aufgelegt werden kann, dadurch gekennzeichnet, daß die Nase der Sperrklinke (2) als eine in den Zwischenraum (b') zwischen zwei Längsschenkeln (12') eines Kettengliedes (12) des Spannkette (11) einführbare Formnase (6) ausgebildet ist, die mit ihrer in Richtung zur Sperrstellung hin vorne liegenden Nasenfläche (7) eine im wesentlichen geradlinige Verlängerung der Außenfläche (8) eines zur Verschwenkachse (3) der Sperrklinke (2) führenden Klinkenschenkels (4) darstellt und mit einer mittig liegenden, bis in diese Außenfläche (8) des Klinkenschenkels verlaufenden Führungsnut (14) versehen ist, in die ein Kettenglied (12) der Spannkette (11) mit seiner Außenseite zumindest teilweise einlegbar ist.

2. Spannschloß nach Anspruch 1, dadurch gekennzeichnet, daß die Sperrklinke (2) im Gehäuse (1) so angeordnet ist, daß sie in ihrer Offenstellung nicht in den Bereich des Schlitzes (18) im Gehäuse (1) hineinragt.

3. Spannschloß nach Anspruch 1 oder 2, dadurch gekennzeichnet, daß die Formnase an ihrer dem Umlenkelement (10) abgewandten Außenfläche (6") eine nach außen gewölbte Form (6") aufweist.

4. Spannschloß nach einem der Ansprüche 1 bis 3, dadurch gekennzeichnet, daß die Formnase (6) im Bereich des vorstehenden Nasenendes abgerundet (r) ist.

5. Spannschloß nach einem der Ansprüche 1 bis 4, dadurch gekennzeichnet, daß die Sperrklinke (6) nur mit einem Betätigungsschenkel (5) aus dem Gehäuse (1) vorragt.

6. Spannschloß nach Anspruch 5, dadurch gekennzeichnet, daß auf der dem Gehäuse (1) abgewandten Außenfläche des Betätigungsschenkels (5) eine Griffmulde (16) zur Anlage eines Fingers eines Benutzers angeformt ist.

7. Spannschloß nach einem der Ansprüche 1 bis 6, dadurch gekennzeichnet, daß das Gehäuse (1) und das Umlenkelement (10) aus Blech bestehen.

8. Spannschloß nach einem der Ansprüche 1 bis 7, dadurch gekennzeichnet, daß die Sperrklinke (2) aus Kunststoff, bevorzugt aus Polycarbonat, besteht.

9. Spannschloß nach einem der Ansprüche 1 bis 8, dadurch gekennzeichnet, daß die Führungsnut (14) im Querschnitt kreisförmig ist.

10. Spannschloß nach einem der Ansprüche 1 bis 9, dadurch gekennzeichnet, daß die Tiefe der Führungsnut (14) mit wachsender Entfernung vom Ende der Formnase (6) größer wird.

11. Spannschloß nach einem der Ansprüche 1 bis 10, dadurch gekennzeichnet, daß die Führungsnut (14) an ihrem der Formnase (6) abgewandten Ende offen ist.

## Claims

1. Tension lock with a housing which has a guide element (10) for a tension chain (11) running over it, with a pawl (2) which is pivotable between an open position and a locked position, is resiliently pretensioned in its locked position towards the guide element (10) and has a projecting catch (6) with which the tension chain (11) can be locked against running through in the tensioning direction, and with a slot which is provided laterally on the housing (1) and extends over the entire height of the housing (1) and through which the tension chain (11) can be introduced laterally from the outside into the housing and can be placed onto the guide element (10), characterised in that the catch of the pawl (2) is constructed as a shaped catch (6) which can be introduced into the space (b') between two long portions (12') of a link (12) of the tension chain (11) and which with its catch surface (7) lying at the front in the direction towards the locked position constitutes a substantially straight extension of the outer surface (8) of a side piece (4) of the pawl leading to the pivot axis (3) of the pawl (2) and is provided with a guide groove (14) which lies centrally and extends as far as this outer surface (8) of the side piece of the pawl and into which a link (12) of the tension chain (11) can be placed at least partially with its outer face.

2. Tension lock as claimed in Claim 1, characterised in that the pawl (2) is disposed in the housing (1) in such a way that in its open position it does not protrude into the region of the slot (18) in the housing (1).

3. Tension lock as claimed in Claim 1 or 2, characterised in that the shaped catch has a convex curved shape (6") on its outer face (6") remote from the guide element (10).

4. Tension lock as claimed in one of Claims 1 to 3, characterised in that the shaped catch (6) is rounded (r) in the region of the projecting end of the catch.

5. Tension lock as claimed in one of Claims 1 to 4, characterised in that the pawl (6) only projects out of the housing (1) with an actuating arm (5).

6. Tension lock as claimed in Claim 5, characterised in that a gripping depression (16) for a user's finger to rest on is formed on the outer face of the actuating arm (5) remote from the housing (1).

7. Tension lock as claimed in one of Claims 1 to 6, characterised in that the housing (1) and the guide element (10) are made from sheet metal.

8. Tension lock as claimed in one of Claims 1 to 7, characterised in that the pawl (2) is made from plastic, preferably from polycarbonate.

9. Tension lock as claimed in one of Claims 1 to 8, characterised in that the guide groove (14) is circular in cross-section.

10. Tension lock as claimed in one of Claims 1 to 9, characterised in that the depth of the guide groove (14) becomes greater as the distance from the end of the shaped catch (6) increases.

11. Tension lock as claimed in one of Claims 1 to 10, characterised in that the guide groove (14) is open at its end remote from the shaped catch (6).

## Revendications

1. Tendeur comportant un boîtier qui présente un élément de renvoi (10) pour une chaîne de tension (11) passant sur celui-ci, comportant un cliquet d'arrêt (2) qui peut pivoter entre une position d'ouverture et une position de blocage, qui est précontraint élastiquement dans sa position de blocage par rapport à l'élément de renvoi (10), et qui présente un ergot (6) saillant au moyen duquel la chaîne de tension (11) peut être bloquée contre un défilement dans le sens de tension, et comportant une fente pratiquée sur le côté du boîtier (1) et s'étendant sur toute la hauteur de ce dernier, fente à travers laquelle la chaîne de tension (11) est introduite de côté dans le boîtier, à partir de l'extérieur, et peut être placée sur l'élément de renvoi (10), caractérisé en ce que l'ergot du cliquet d'arrêt (2) est réalisé sous la forme d'un ergot profilé (6) pouvant être introduit dans l'espace intermédiaire (b') compris entre deux côtés longitudinaux (12') d'un maillon (12) de la chaîne de tension (11), et qui constitue, par sa surface d'ergot (7), située à l'avant dans la direction de la position de blocage, un prolongement sensiblement rectiligne de la surface extérieure (8) d'une branche (4) du cliquet, menant vers l'axe de pivotement (3) du cliquet d'arrêt (2), et qui est pourvu d'une rainure de guidage (14) située au centre et s'étendant jusque dans cette surface extérieure (8) de la branche du cliquet, rainure dans laquelle un maillon (12) de la chaîne de tension (11) peut être placé au moins en partie par son côté extérieur.

2. Tendeur selon la revendication 1, caractérisé en ce que le cliquet d'arrêt (2) est disposé dans le boîtier (1) de manière que dans sa position d'ouverture, il ne s'engage pas à l'intérieur de la zone de la fente (18) dans le boîtier (1).

3. Tendeur selon la revendication 1 ou 2, caractérisé en ce que l'ergot profilé présente une forme (6") bombée vers l'extérieur, sur sa surface extérieure (6") tournée à l'opposé de l'élément de renvoi (10).

4. Tendeur selon l'une des revendications 1 à 3, caractérisé en ce que l'ergot profilé (6) est arrondi dans la zone de l'extrémité saillante de l'ergot.

5. Tendeur selon l'une des revendications 1 à 4, caractérisé en ce que le cliquet d'arrêt (6) ne dépasse du boîtier (1) que par une branche d'actionnement (5).

6. Tendeur selon la revendication 5, caractérisé en ce qu'une poignée en creux (16) est formée sur la surface extérieure de la branche d'actionnement (5), tournée à l'opposé du boîtier (1), pour que l'utilisateur y applique un doigt.

7. Tendeur selon l'une des revendications 1 à 6, caractérisé en ce que le boîtier (1) et l'élément de renvoi (10) sont en tôle.

8. Tendeur selon l'une des revendications 1 à 7, caractérisé en ce que le cliquet d'arrêt (2) est en matière plastique, de préférence en polycarbonate.

9. Tendeur selon l'une des revendications 1 à 8, caractérisé en ce que la section transversale de la rainure de guidage (14) est de forme circulaire.

10. Tendeur selon l'une des revendications 1 à 9, caractérisé en ce que la profondeur de la rainure de guidage (14) augmente à mesure que l'éloignement de l'extrémité de l'ergot profilé (6) augmente.

11. Tendeur selon l'une des revendications 1 à 10, caractérisé en ce que la rainure de guidage (14) est ouverte à son extrémité tournée à l'opposé de l'ergot profilé (6).
